# EUROPÄISCHE PATENTSCHRIFT

(11) **EP 0 860 105 B1**
(45) Veröffentlichungstag und Bekanntmachung des Hinweises auf die Patenterteilung: **06.11.2002**
(21) Anmeldenummer: 98101511.8
(22) Anmeldetag: 29.01.1998
(51) Int. Cl.: A01C 17/00, A01C 15/00

(54) **System zum Ausbringen von mehreren Sorten Material in einem Arbeitsgang**
System for spreading different kind of material in one movement
Système d'épandage de plusieurs sortes de matériau en un seul passage

(30) Priorität: 20.02.1997 DE 19706600; 01.04.1997 DE 19713409
(43) Veröffentlichungstag der Anmeldung: 26.08.1998
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Dreyer, Justus, 49205 Hasbergen (DE)

(56) Entgegenhaltungen:
- EP-A- 0 761 084
- DE-U- 9 320 599
- FR-A- 2 061 686

## Beschreibung

Die Erfindung betrifft ein System zum Ausbringen von mehreren Sorten von Material in einem Arbeitsgang mit einem Ackerschlepper.

Ein derartiges System ist beispielsweise in der DE-OS 20 44 566 beschrieben. Bei diesem System wird ein Schleuderstreuer mit zwei Schleuderscheiben, die in unterschiedlichen Höhen angeordnet sind, verwendet. Diesen Schleuderscheiben ist jeweils ein Teilbehälter eines Vorratsbehälters zugeordnet. In jedem Teilbehälter kann eine andere Materialsorte eingefüllt werden, so daß in einem Arbeitsgang zwei verschiedene Sorten von Material ausgestreut werden können. Jedes der Streuorgane streut somit ein anderes Material aus. Es wird also ermöglicht, die beiden verschiedenen Materialsorten über den gleichen Geländestreifen während der Fortbewegung auszustreuen.

Der Erfindung liegt die Aufgabe zugrunde, in einfacher Weise ein System zu schaffen, mit dem es möglich ist, teilflächenspezifisch entsprechend der Nährstoffversorgung des Bodens gezielt den fehlenden Nährstoff auszubringen.

Diese Aufgabe wird durch die Merkmale des Anspruches gelöst. Infolge dieser Maßnahmen kann individuell der erforderliche Nährstoff gezielt entsprechend der vorhandenen Nährstoffversorgung ausgebracht werden. Es ist aufgrund der Möglichkeit, daß die Ausbringmenge in zumindest zwei Arbeitsbreitenabschnitten veränderbar ist, eine ausreichend genaue Nährstoffanpassung möglich.

Weiterhin läßt sich in einfacher Weise die getrennte Nährstoffdosierung und - ausbringung entsprechend der Nährstoffversorgung des Bodens dadurch realisieren, daß der Ackerschlepper drei Anbauräume aufweist, daß eine Verteilmaschine in der hinteren Dreipunktkupplung, eine weitere Verteilmaschine in der vorderen Dreipunktkupplung und eine dritte Verteilmaschine auf dem Anbauraum aufgebaut ist. Es ist auch möglich, daß ein Anbaurahmen vorgesehen ist, an welchem zwei Verteilmaschinen übereinander an der Rückseite des Schleppers anordbar ist. Eine dritte Verteilmaschine ist an der vorderen Dreipunktkupplung angeordnet. Hierbei sind die Verteilmaschinen mit dem gleichen Verteilsystem ausgestattet.

Eine äußerst genaue und automatische Anpassung der auszubringenden Nährstoffmenge je Nährstoffsorte entsprechend der teilflächenspezifischen Nährstoffversorgung läßt sich durch die kennzeichnenden Merkmale des Anspruches 5 realisieren. Als vorteilhaft hat sich erwiesen, daß an und/oder auf dem Ackerschlepper zumindest für die drei Hauptdüngersorten, wie Stickstoff (N), Phosphor (P) und Kali (K) jeweils eine Verteilmaschine angeordnet ist.

Weitere Einzelheiten der Erfindung sind den übrigen Unteransprüchen, der Beispielsbeschreibung und den Zeichnungen zu entnehmen. Hierbei zeigen
- Fig.1: das Ausbringsystem mit einem drei Anbauräume aufweisenden Schlepper in Seitenansicht und in Prinzipdarstellung,
- Fig.2: ein weiteres Ausbringsystem mit drei Verteilmaschinen in Seitenansicht und in Prinzipdarstellung und
- Fig.3: ein weiteres Verteilsystem in gleicher Darstellungsweise.

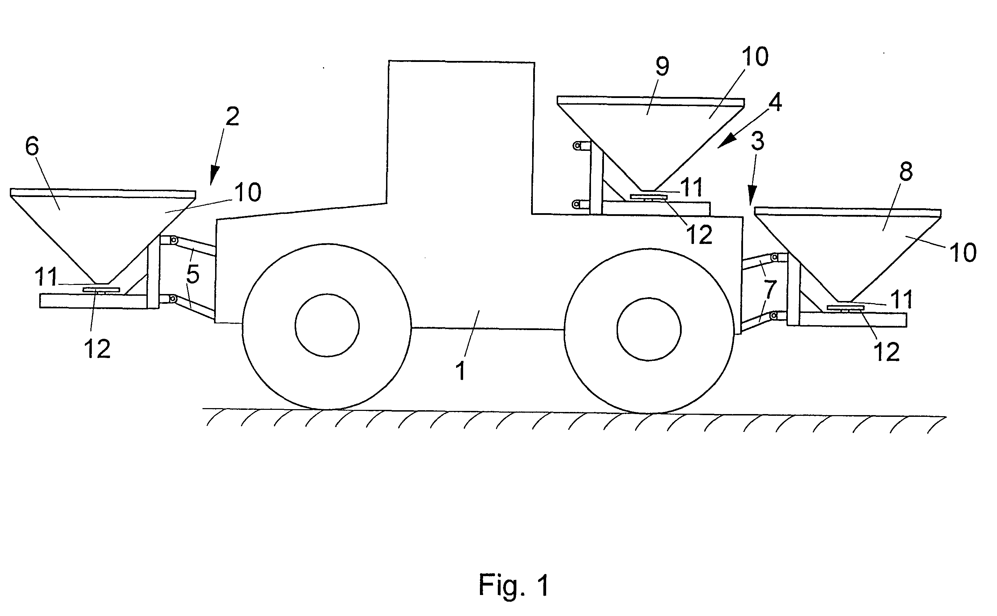

Das System zum Ausbringen von mehreren Sorten Material in einem Arbeitsgang besteht gemäß Fig.1 aus dem Systemschlepper 1 mit den Anbauräumen 2, 3 und 4. In dem vorderen Anbauraum 1, der von dem vorderen Dreipunktkraftheber 5 gebildet wird, ist die als Schleuderdüngerstreuer 6 ausgebildete Verteilmaschine angeordnet. In dem hinteren Anbauraum 2, der von dem hinteren Dreipunktkraftheber 7 gebildet wird, ist der weitere Schleuderdüngerstreuer 8 angeordnet. Ein dritter Schleuderstreuer 9 ist auf dem Aufbauraum 4 aufgebaut. Die als Schleuderdüngerstreuer ausgebildeten Verteilmaschinen weisen jeweils einen Vorratsbehälter 10 mit einem Dosierorgan 11 auf, welches das Material in einstellbarer Weise dem als Schleuderstreuwerk 12 ausgebildeten Verteilorgan zuführt. Jede Verteilmaschine 6, 8, 9 weist eine derartige Dosiervorrichtung 11 auf, daß zumindest in zwei Arbeitsbreitenabschnitten die Ausbringmenge veränderbar ist. Hierdurch ist eine halbseitige Ausbringmengenänderung bzw. eine halbseitige Arbeitsbreitenreduzierung möglich. Mit der Verteilmaschine 6 wird Phosphordünger, mit der Verteilmaschine 8 Stickstoffdünger und mit der Verteilmaschine 9 Kalidünger ausgebracht. Jeder Schleuderstreuer 6, 8, 9 weist zwei Schleuderscheiben 12 auf, denen jeweils eine Dosiereinrichtung 11 zugeordnet ist. Desweiteren ist ein nicht dargestellter Bordrechner zur Steuerung und Regelung der Ausbringmenge für die einzelnen Verteilmaschinen 6, 8, 9 vorgesehen. In dem Bordrechner sind standortspezifisch die Nährstoffversorgung des Bodens und die erforderliche Materialmenge abgespeichert. Der Bordrechner wirkt mit einer den Standort aktuell ermittelnden Vorrichtung, beispielsweise mit einer DGPS-Einrichtung zusammen. Über dem Bordrechner wird dann jedes Dosierorgan 11 entsprechend angesteuert, so daß der erforderliche Nährstoff in der erforderlichen Menge ausgebracht wird.

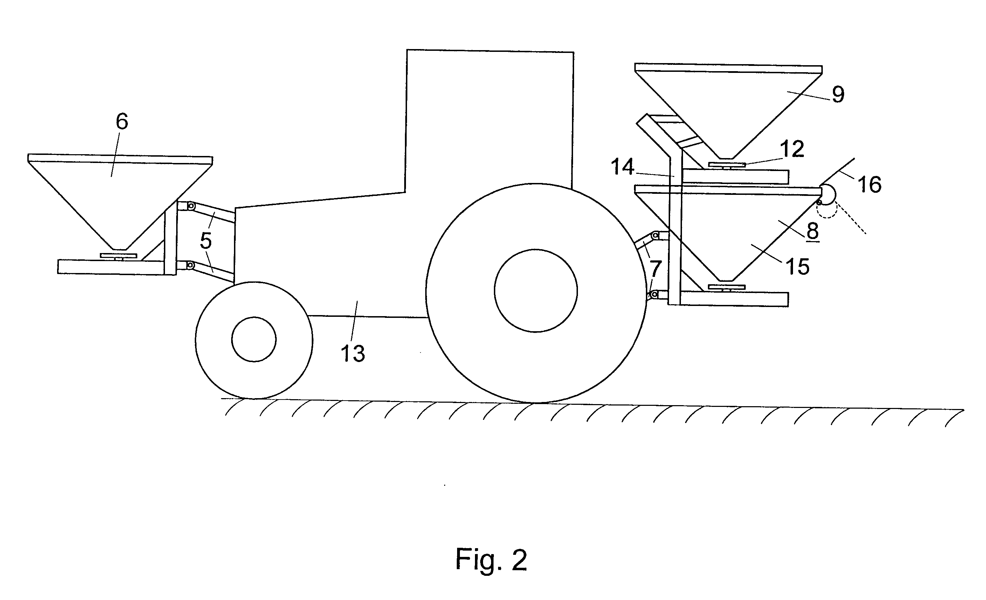

Die Fig.2 zeigt das System mit einem anderen Schlepper 12. Um an einen derartigen Standardschlepper 13 drei Verteilmaschinen 6, 8, 9 anordnen zu können, ist in der hinteren Dreipunktkupplung 7 ein Anbaurahmen 14 vorgesehen, an dem zwei Verteilmaschinen 8, 9 übereinander angeordnet sind. Ein dritte Verteilmaschine 6 ist an dem vorderen Dreipunktkraftheber 5 angeordnet. Um in den hinteren unteren Behälter 15 in einfacher Weise das Material einfüllen zu können, ist eine abklappbare Einfüllrutsche 16 vorgesehen. Der obere Schleuderstreuer 9 ist so hoch angeordnet, daß die Schleuderscheibe 12 das Material verteilen kann.

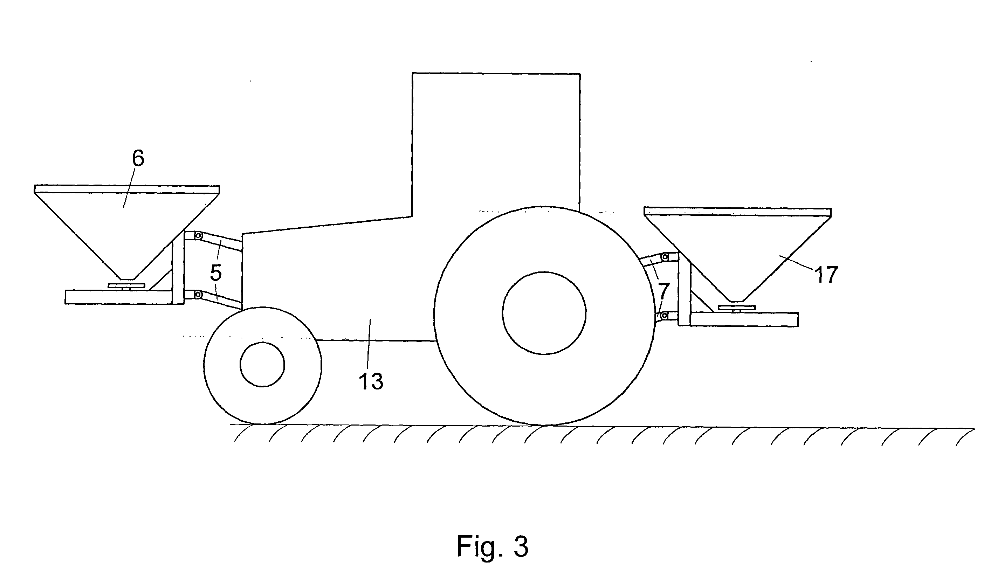

Bei dem Ausbringsystem gemäß Fig.3 sind zwei Schleuderdüngerstreuer 6, 17 vorgesehen, wobei der eine in der vorderen Dreipunktkupplung 5 und der andere in der hinteren Dreipunktkupplung 7 angeordnet ist. Bei diesem Verteilsystem werden mit dem hinteren Schleuderstreuer 17 ein Mischdünger, der zwei Nährstoffkomponenten aufweist ausgebracht, während mit dem vorderen Schleuderstreuer 6 die dritte Nährstoffkomponente ausbringbar ist.

## Patentansprüche

1. System zum Ausbringen von mehreren Sorten von Material in einem Arbeitsgang mit einem Ackerschlepper mit zumindest zwei Anbauräumen zum An- und/oder Aufbau von Vorratsbehälter, Dosier- und Verteilorganen aufweisenden Verteilmaschinen, wobei zumindest zwei Verteilmaschinen (6, 8, 9) an oder auf den Anbauräumen (2, 3, 4) auf- bzw. angebaut sind, wobei jede Verteilmaschine (6, 8, 9) eine Vorrichtung (11) aufweist, mittels welcher zumindest in zwei Arbeitsbreitenabschnitten die Ausbringmenge veränderbar ist.

2. System insbesondere nach Anspruch 1, **dadurch gekennzeichnet, daß** der Ackerschlepper (1) drei Anbauräume (2, 3, 4) aufweist, daß eine Verteilmaschine (8) in der hinteren Dreipunktkupplung (7), eine weitere Verteilmaschine (6) in der vorderen Dreipunktkupplung(5), und eine dritte Verteilmaschine (9) auf dem Anbauraum (4) aufgebaut ist.

3. System nach einem oder mehreren der vorstehenden Ansprüche, **dadurch gekennzeichnet, daß** die Verteilmaschinen (6, 8, 9, 17) mit gleichen Verteilsystemen (12) ausgestattet sind.

4. System nach einem oder mehreren der vorstehenden Ansprüche, **dadurch gekennzeichnet, daß** die Verteilmaschinen (6, 8, 9, 17) als Schleuderstreuer mit zumindest zwei Schleuderscheiben (12) ausgebildet sind.

5. System nach einem oder mehreren der vorstehenden Ansprüche, **dadurch gekennzeichnet, daß** ein Bordrechner zur Steuerung und/oder Regelung der Ausbringmenge für die einzelnen Verteilmaschinen (6, 8, 9, 17) vorgesehen ist, daß in dem Bordrechner standortspezifisch die Nährstoffversorgung des Bodens und/oder standortspezifisch die erforderliche Materialmenge abgespeichert ist, daß der Bordrechner mit einer den Standort aktuell ermittelnden Vorrichtung, beispielsweise einer DGPS-Einrichtung zusammenwirkt.

6. System nach einem oder mehreren der vorstehenden Ansprüche, **dadurch gekennzeichnet, daß** der auf dem Anbauraum (9) aufgebaute Schleuderstreuer derart im Bezug auf den hinteren Schleuderstreuer (8) angeordnet ist, daß sich die Schleuderscheiben (12) oberhalb der oberen Kante des hinteren Schleuderstreuers (8) befinden.

7. System, insbesondere nach einem oder mehreren der vorstehenden Ansprüche, **dadurch gekennzeichnet, daß** ein Anbaurahmen (14) vorgesehen ist, an welchem zwei Verteilmaschinen (8, 9) übereinander an der Rückseite des Schleppers (13) anordbar sind.

8. System nach Anspruch 7, **dadurch gekennzeichnet, daß** an der Oberseite des Vorratsbehälters (15) der unteren Verteilmaschine (8) eine Einfüllrutsche (16) anordbar ist.

9. System nach Anspruch 8, **dadurch gekennzeichnet, daß** die Einfüllrutsche (16) schwenkbar befestigt ist.

10. System, insbesondere nach einem oder mehreren der vorstehenden Ansprüche, **dadurch gekennzeichnet, daß** an und/oder auf dem Ackerschlepper zumindest für die drei Hauptdüngersorten, wie Stickstoff (N), Phosphor (P) und Kali (K) jeweils eine Verteilmaschine (6, 8, 9) angeordnet ist.

## Claims

1. System for distributing several types of material in one operation with a tractor, said system having at least two attachment areas for the attachment and/or fitting of distributors, which include hoppers, metering members and distributing members, wherein at least two distributors (6, 8, 9) are fitted on or respectively attached to the attachment areas (2, 3, 4), and wherein each distributor (6, 8, 9) includes an apparatus (11), by means of which the quantity for distibution is variable in at least two working width portions.

2. System, more especially according to claim 1, **characterised in that** the tractor (1) includes three attachment areas (2, 3, 4), and **in that** one distributor (8) is fitted in the rear three-point linkage (7), an additional distributor (6) is fitted in the front three-point linkage (5), and a third distributor (9) is fitted on the attachment area (4).

3. System according to one or more of the preceding claims, **characterised in that** the distributors (6, 8, 9, 17) are provided with identical distributing systems (12).

4. System according to one or more of the preceding claims, **characterised in that** the distributors (6, 8, 9, 17) are in the form of centrifugal spreaders having at least two centrifugal discs (12).

5. System according to one or more of the preceding claims, **characterised in that** an on-board computer is provided for controlling and/or regulating the quantity for distribution for the individual distributors (6, 8, 9, 17), **in that** the supply of nutrients for the soil at a specific location is stored in the on-board computer and/or the required quantity of material at a specific location is stored in the on-board computer, and **in that** the on-board computer co-operates with an apparatus which actually ascertains the location, for example a DGPS system.

6. System according to one or more of the preceding claims, **characterised in that** the centrifugal spreader, which is fitted on the attachment area (9), is disposed in such a manner relative to the rear centrifugal spreader (8) that the centrifugal discs (12) are situated above the upper edge of the rear centrifugal spreader (8).

7. System, more especially according to one or more of the preceding claims, **characterised in that** an attachment frame (14) is provided, on which are disposable two distributors (8, 9) one above the other on the rear side of the tractor (13).

8. System according to claim 7, **characterised in that** a filler chute (16) is disposable on the upper side of the hopper (15) of the lower distributor (8).

9. System according to claim 8, **characterised in that** the filler chute (16) is pivotably mounted.

10. System, more especially according to one or more of the preceding claims, **characterised in that** one respective distributor (6, 8, 9) is disposed at and/or on the tractor for at least the three main types of fertiliser, such as nitrogen (N), phosphorus (P) and potassium (K).

## Revendications

1. Système de distribution de plusieurs sortes de produits au cours d'une opération, comprenant un tracteur agricole avec une machine distributrice, comportant au moins deux espaces de montage pour le montage et/ou l'installation de réservoirs, d'organes de dosage et de distribution,
au moins deux machines distributrices (6, 8, 9) étant susceptibles d'être montées ou démontées des espaces de montage (2, 3, 4),
chaque machine distributrice (6, 8, 9) comportant un dispositif (11) à l'aide duquel on peut modifier la quantité distribuée dans au moins deux segments de largeur de travail.

2. Système notamment selon la revendication 1,
**caractérisé en ce que**
le tracteur à usage agricole (1) comporte trois espaces de montage (2, 3, 4), une machine distributrice (8) étant associée à l'attelage en trois points (7), arrière, une autre machine distributrice (6) étant associée à l'attelage en trois points avant (5) et une troisième machine distributrice (9) étant installée dans l'autre espace de montage (4).

3. Système selon une ou plusieurs des revendications précédentes,
**caractérisé en ce que**
les machines distributrices (6, 8, 9, 17) sont équipées des mêmes systèmes distributeurs (12).

4. Système selon une ou plusieurs des revendications précédentes,
**caractérisé en ce que**
les machines distributrices (6, 8, 9, 17) sont réalisées sous la forme d'épandeurs centrifuges ayant au moins deux disques d'épandage (12).

5. Système selon une ou plusieurs des revendications précédentes,
**caractérisé par**
un calculateur de bord pour commander et/ou réguler la quantité distribuée par les différents distributeurs (6, 8, 9, 17), le calculateur de bords contenant en mémoire de manière spécifique à l'emplacement, l'alimentation en matière nutritive du sol et/ou de manière spécifique à l'emplacement, les quantités de produit nécessaires, et
le calculateur de bord coopérant avec un dispositif déterminant l'emplacement instantané par exemple une installation DGPS.

6. Système selon une ou plusieurs des revendications précédentes,
**caractérisé en ce que**
l'épandeur centrifuge installé dans l'espace de montage (9) est monté par rapport à l'épandeur centrifuge arrière (8) de façon que les disques d'épandage (12) se trouvent au-dessus de l'arête supérieure de l'épandeur centrifuge arrière (8).

7. Système selon une ou plusieurs des revendications précédentes,
**caractérisé en ce qu'**
il comporte un châssis de montage (14) recevant deux distributeurs (8, 9) placés l'un au-dessus de l'autre sur le côté arrière du tracteur (13).

8. Système selon la revendication 7,
**caractérisé par**
une goulotte de remplissage (16) prévue sur le côté supérieur du réservoir (15) du distributeur inférieur (8).

9. Système selon la revendication 8,
**caractérisé en ce que**
la goulotte de remplissage (16) est fixée de manière pivotante.

10. Système notamment selon une ou plusieurs des revendications précédentes,
**caractérisé en ce que**
le tracteur agricole comporte chaque fois un distributeur (6, 8, 9) prévu au moins pour les trois types principaux d'engrais tels que l'azote (N), le phosphore (P) et la potasse (K).
